(19) **Europäisches Patentamt**
**European Patent Office**
**Office européen des brevets**

(11) **EP 1 833 715 B1**

(12) **EUROPÄISCHE PATENTSCHRIFT**

(45) Veröffentlichungstag und Bekanntmachung des Hinweises auf die Patenterteilung:
**27.08.2008 Patentblatt 2008/35**

(51) Int Cl.:
**B62D 1/28** (2006.01)

(21) Anmeldenummer: **05794670.9**

(22) Anmeldetag: **15.09.2005**

(86) Internationale Anmeldenummer:
**PCT/EP2005/054593**

(87) Internationale Veröffentlichungsnummer:
**WO 2006/051016 (18.05.2006 Gazette 2006/20)**

(54) **VORRICHTUNG ZUM HALTEN EINES FAHRZEUGS IN SEINER FAHRSPUR**

DEVICE FOR KEEPING A VEHICLE IN ITS TRAFFIC LANE

DISPOSITIF POUR MAINTENIR UN VEHICULE DANS SA VOIE DE CONDUITE

(84) Benannte Vertragsstaaten:
**DE FR GB**

(30) Priorität: **15.11.2004 DE 102004055064**

(43) Veröffentlichungstag der Anmeldung:
**19.09.2007 Patentblatt 2007/38**

(73) Patentinhaber: **ROBERT BOSCH GMBH**
**70442 Stuttgart (DE)**

(72) Erfinder:
• **SCHERL, Michael**
**74321 Bietigheim (DE)**

• **WEILKES, Michael**
**74343 Sachsenheim (DE)**
• **BUERKLE, Lutz**
**71229 Leonberg (DE)**
• **RENTSCHLER, Tobias**
**75180 Pforzheim (DE)**

(56) Entgegenhaltungen:
**EP-A- 0 980 813          WO-A-03/076250**
**WO-A-20/05063552**

**Beschreibung**

Die Erfindung betrifft einen Vorrichtung zum Halten eines Fahrzeugs in seiner Fahrspur gemäß dem Oberbegriff des Patentanspruchs 1.

Aus dem Stand der Technik sind verschiedene Systeme bekannt, die den Fahrer eines Kfz darin unterstützen, das Fahrzeug in seiner Fahrspur zu halten. Diese Systeme werden auch als LKS-Systeme (LKS: Lane Keeping Support) bezeichnet. Bekannte LKS-Systeme umfassen ein Fahrspurerkennungssystem, wie z. B. einem Videosystem, mit der die Krümmung der Fahrspur und die relative Position des Fahrzeugs in der Fahrspur (die sogenannte Ablage und Orientierung) bestimmt werden können. Wenn der vom Fahrer gewählte Lenkwinkel von dem durch den Fahrspurverlauf vorgegebenen Soll-Lenkwinkel zu stark abweicht, werden mit Hilfe eines Lenkstellers, wie z.B. eines Servomotors, künstliche Lenkkräfte auf die Lenkung des Fahrzeugs ausgeübt. Diese Lenkkräfte sind so stark, dass sie vom Fahrer haptisch erfasst werden können und den Fahrer darauf hinweisen, wie er die Lenkung betätigen müsste, um das Fahrzeug in seiner Fahrspur zu halten.

Das Fahrspurerkennungssystem kann beispielsweise als Videosystem realisiert sein, dessen Videosignale von einer Signalverarbeitungssoftware verarbeitet werden, die die gewünschten geometrischen Daten (Ablage, Orientierung, Fahrspurkrümmung) liefert. Andere Fahrspurerkennungssysteme umfassen z.B. einen Magnetsensor, der die Fahrzeugposition in Verbindung mit in der Fahrbahn integrierten Magneten bestimmt, oder wahlweise auch Radarsensoren.

Aus den geometrischen Ablagedaten und einer Information über die Fahrspurkrümmung wird dann mittels eines mathematischen Referenzmodells (Algorithmus) ein Referenz-Lenkwinkel berechnet, der an der Lenkung eingeschlagen werden müsste, um das Fahrzeug optimal in seiner Fahrspur zu halten. Bei einer Abweichung des Fahrer-Lenkwinkels vom Referenzlenkwinkel wird dann mit Hilfe eines Lenkstellers ein Unterstützungsmoment auf die Lenkung aufgebracht. Das Ünterstützungsmoment wird dabei anhand einer vorgegebenen Kennlinie berechnet, die einen funktionellen Zusammenhang zwischen dem Unterstützungsmoment und der Lenkwinkel-Differenz darstellt.

Hierzu wird auch auf die Druckschriften Naab, Reichhart: "Driver Assistance Systems for Lateral and Longitudinal Vehicle Guidance-Heading Control and Active Cruise Support" AVEC 94, und Shimakage, Kawazoe, Sadano, Murakami: "Design of Lane-Keeping Control with Steering Torque input for a Lane-Keeping Support System", SAE Technical Papers 2001-01-0480 verwiesen.

Aus der EP 0 980 813 A1 ist ein Lenksystem in einem mit einer Spurfolgeeinrichtung ausgestatteten Fahrzeug bekannt. Damit die Spurfolgeeinrichtung bei höheren Fahrzeuggeschwindigkeiten verwendbar ist, wird ein Lenksystem vorgeschlagen mit einer Lenkhandhabe in einem Lenkstrang, der die Lenkhandhabe mit Fahrzeuglenkrädern koppelt, mit einem Servomotor, der mit dem Lenkstrang gekoppelt ist, mit einem Servoventil, das im Lenkstrang angeordnet ist und ein erstes Steuerteil, das einem lenkhandhabenseitigen Abschnitt des Lenkstranges zugeordnet ist, sowie ein zweites Steuerteil aufweist, das einem fahrzeuglenkräderseitigen Abschnitt des Lenkstranges zugeordnet ist, und den Servomotor in Abhängigkeit von den Relativwerstellungen zwischen den Steuerteilen betätigt, mit einem Stellantrieb, der mit dem lenkhandhabenseitigen Abschnitt des Lenkstranges gekoppelt ist und zur Erzeugung einer Lenkkraft dient, und mit einer Regel- und Steueranordnung, die mittels einer Sensorik das Folgen einer Spur ermöglichende Lenkwinkel-Sollwerte und mittels eines Lenkwinkelsensors Lenkwinkel-Istwerte ermittelt und in Abhängigkeit eines Vergleiches der Soll- und Ist-Lenkwinkel den Stellantrieb betätigt; wobei der Lenkwinkelsensor mit dem fahrzeuglenkräderseitigen Abschnitt des Lenkstranges zusammenwirkt.

Der Oberbegriff des unabhängigen Anspruchs ist der EP 0 980 813 A1 entnommen. Es ist Aufgabe der vorliegenden Erfindung, einen Lenkeingriff des Fahrers nicht vollständig auszuregeln, sondern eine bleibenden Regelabweichung zu hinterlassen. Damit ist ein Übersteuern der Lenkung durch den Fahrer jederzeit möglich.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Ein wesentlicher Gedanke der Erfindung besteht darin, eine die Querdynamik des Fahrzeugs beschreibende Größe, insbesondere den Lenkwinkel des Fahrzeugs mittels eines geschlossenen Regelkreises zu regeln, der ein Übertragungsglied als Regler und einen Lenksteller als Stellglied umfasst. Das Übertragungsglied hat vorzugsweise ein stationäres Regelverhalten, d.h. ein Regelverhalten, mit dem eine Regelabweichung der Regelgröße (z. B. des Lenkwinkels) für große Zeiten stabil ausgeregelt werden kann. Die Verwendung eines solchen Regelkreises hat den wesentlichen Vorteil, dass das Fahrzeug automatisch in der vorgegebenen Fahrspur gehalten werden kann, ohne dass der Fahrer in die Lenkung eingreifen muss.

Gemäß der Erfindung hat das Übertragungsglied kein I-Verhalten. Dadurch wird ein Lenkeingriff des Fahrers vom Regelkreis nicht zunehmend kompensiert, sondern führt zu einer bleibenden Regelabweichung. Bei entsprechender Dimensionierung des Lenksystems bleibt ein Übersteuern der Lenkung durch den Fahrer jederzeit möglich.

Das erfindungsgemäße Übertragungsglied ist vorzugsweise als eine lineare Kennlinie realisiert, die z.B. in einem Steuergerät hinterlegt ist. Die Steigung der linearen Kennlinie ist dabei vorzugsweise so ausgelegt, dass das Unterstützungsmoment ausreichend hoch ist, um eine Lenkwinkelabweichung selbsttätig zu kompensieren.

Andererseits ist das vom Lenksteller aufgebrachte Unterstützungsmoment vorzugsweise nur so stark, dass es vom Fahrer übersteuert werden kann. Der Fahrer behält somit immer die Möglichkeit, die Fahrtrichtung durch Betätigung des Lenkrads selbst bestimmen zu können.

Der Lenksteller umfasst vorzugsweise einen Momentenregelkreis, der vom Übertragungsglied einen Momentenwert erhält und das Unterstützungsmoment als Ausgangsgröße ausgibt.

Die Erfindung wird nachstehend anhand der beigefügten Zeichnungen beispielhaft näher erläutert. Es zeigen:

Fig. 1 eine schematische Darstellung einer Lenkung eines Kfz; und

Fig. 2 eine schematische Blockdarstellung eines Systems zum automatischen Halten eines Fahrzeugs in seiner Fahrspur.

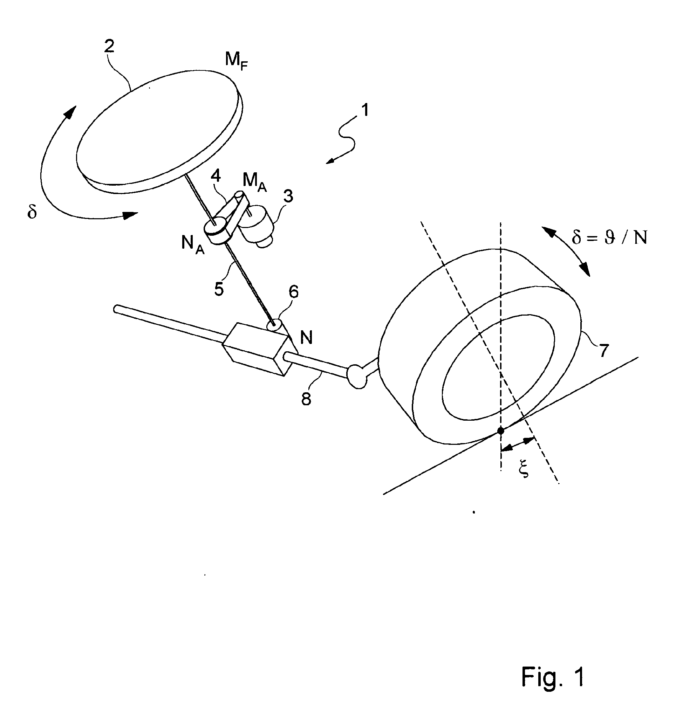

Fig. 1 zeigt eine Vorderradlenkung 1 eines Kfz mit einem Lenkrad 2, einer Lenkstange 5, einem Lenkgetriebe 6 mit einem Übersetzungsverhältnis N und einer Spurstange 8, mittels der ein Vorderrad 7 gelenkt wird. Die Lenkung 1 umfasst ferner einen Lenksteller 3, wie z.B. einen Servomotor, mit dem über einen Riementrieb 4 ein Moment $M_A$ auf die Lenkstange 5 ausgeübt werden kann. Das Übersetzungsverhältnis ist dabei mit $N_A$ bezeichnet.

Die dargestellte Lenkung ist mechanisch identisch aufgebaut wie die meisten herkömmlichen Lenkungen und wird hier im Rahmen eines Querdynamik-Regelsystems dazu genutzt, das Fahrzeug 18 durch Aufbringen eines Führungsmoments $M_A$ mittels des Lenkstellers 3 in seiner Fahrspur 20 zu halten.

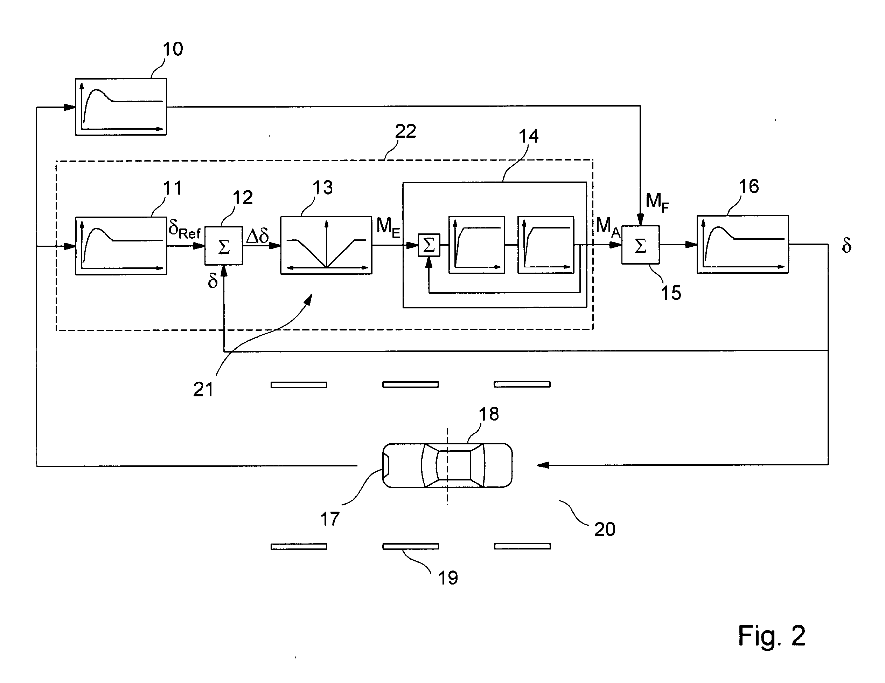

Fig. 2 zeigt einen Überblick über das Gesamtsystem zum Halten eines Fahrzeugs 18 in seiner Fahrspur 20. Das Querdynamik-Regelsystem umfasst eine am Fahrzeug 18 angeordnete Sensorik 17 zur Fahrspurerkennung, wie z. B. ein Videosystem, mittels der die Ablage und Orientierung des Fahrzeugs 18 bezüglich der Fahrspur 20, sowie die Fahrspurkrümmung ermittelt werden können. Zur Fahrspurerkennung werden üblicherweise Videosysteme mit einer videokamera und einer speziellen Bildverarbeitungssoftware eingesetzt, die aus den Bilddaten die gewünschten geometrischen Daten ermittelt.

Die geometrischen Daten, nämlich die Ablage, Orientierung und Fahrbahnkrümmung, werde einem mathematischen Referenzmodell 11 zugeführt, das daraus einen Referenz-Lenkwinkel $\delta_{ref}$ berechnet. Dabei ist der Referenz-lenkwinkel $\delta_{ref}$ derjenige Lenkwinkel, den der Fahrer einschlagen müsste, um das Fahrzeug 18 in der Fahrspur 20 zu halten. Der nachgeordnete Regelkreis 21 dient dazu, die Regeldifferenz ($\delta_{ref} - \delta$) des Lenkwinkels stabil auszuregeln und somit das Fahrzeug in seiner Spur 20 zu halten.

Der Regelkreis 21 umfasst einen Knoten 12 (Addierknoten), an dem die Regeldifferenz $\delta_{ref} - \delta$ der Regelgröße berechnet wird, ein Übertragungsglied 13, das den Regler des Regelkreises bildet, sowie den Lenksteller 3 mit einem Momentenregelkreis 14,-der das Stellglied des Regelkreises 21 bildet. Die Elemente 11,12,13 und der Momentenregelkreis 14 des Lenkstellers 3 sind üblicherweise als Softwaremodule in einem Steuergerät 22 implementiert.

Das Übertragungsglied 13 ist derart ausgelegt, dass eine Regelabweichung stabil ausgeregelt werden kann. Im dargestellten Beispiel ist das Übertragungsglied 13 als eine Kennlinie mit Proportional-Regelverhalten (p-Glied) realisiert.

Das Übertragungsglied 13 erzeugt in Abhängigkeit von der Regelabweichung ein Moment $M_E$, das dem Lenksteller 3 zugeführt wird. Der Lenksteller 3 setzt das Moment $M_E$ je nach Regelcharakteristik in ein Führungsmoment $M_A$ um, das dann auf die Lenkstange 5 ausgeübt wird. Dieses Moment $M_A$ überlagert sich mit dem vom Fahrer am Lenkrad 2 ausgeübten Moment $M_F$ (dies ist in Block 15 dargestellt). Das Übertragungsverhalten der Lenkung 1 ist schließlich durch den Block 16 dargestellt.

In Abhängigkeit von der Lenkaktivität des Fahrers (Moment $M_F$), die durch den Block 10 angedeutet ist, und den. Führungsmoment $M_A$ stellt sich schließlich ein Lenkwinkel delta am Rad 7 ein. Der Lenkwinkel $\delta$ wird z.B. sensorisch gemessen und der entsprechende Wert über einen Rückkoppelpfad in den Knoten 12 gekoppelt und zur Berechnung der neuen Regelabweichung herangezogen.

Zur mathematischen Beschreibung des Gesamtsystems lassen sich folgende Gleichungen ansetzen: Für den Lenkradwinkel $\vartheta$ (der in einem festen Zusammenhang mit dem Lenkwinkel $\delta$ steht) kann unter Berücksichtigung aller am Lenksystem 1 angreifenden Drehmomente folgende Beziehung aufgestellt werden:

$$J_s\,\ddot{\vartheta} + c_s\,\dot{\vartheta} = N_A M_A - \frac{\xi K_S c_v}{N}\left(\frac{1}{N}\vartheta - \frac{l_v}{v}\dot{\psi} - \beta\right) + M_F \qquad (1)$$

Dabei sind auf der linken Seite der Gleichung $J_s$ das äquivalente Trägheitsmoment und $c_s$ eine äquivalente Dämpfungskonstante. Der erste Term auf der rechten Seite der Gleichung beschreibt dabei das vom Lenksteller 3

aufgebrachte Moment $M_A$ mit einem Übersetzungsverhältnis $N_A$, der zweite Term das durch einen Schräglauf der Vorderräder 7 hervorgerufene Drehmoment mit $\xi$ der Spurlänge des Lenksystems, $K_s$ einer Lenkunterstützung der Servolenkung, $c_v$ der Schräglaufsteifigkeit an den Vorderrädern 7, $l_v$ dem Achsabstand der Vorderachse zum Fahrzeugschwerpunkt, $d\psi/dt$ der Giergeschwindigkeit und $\beta$ dem Schwimmwinkel. Der dritte Term bezeichnet das vom Fahrer am Lenkrad 2 aufgebrachte Moment $M_F$.

Die Giergeschwindigkeit $d\psi/dt$ und der Schwimmwinkel $\beta$ in der Gleichung (1) lassen sich für die stationäre Kurvenfahrt in bekannter Weise durch folgende Gleichungen ausdrücken:

$$\dot{\psi}_{st} = \frac{v}{l_v + l_h - mv^2 \frac{l_v c_v - l_h c_h}{c_v c_h (l_v + l_h)}} \delta = v c_\psi \, \delta \qquad (2)$$

$$\beta_{st} = \frac{l_h - mv^2 \frac{l_v}{c_h (l_v + l_h)}}{l_v + l_h - mv^2 \frac{l_v c_v - l_h c_h}{c_v c_h (l_v + l_h)}} \delta = c_\beta \, \delta \qquad (3)$$

wobei $v$ die Fahrzeuggeschwindigkeit, $m$ die Fahrzeugmasse, $\delta$ der Lenkwinkel, $c_{v,h}$ die Schräglaufsteifigkeiten vorne und hinten sowie $l_{v,h}$ die Achsabstände vom Fahrzeugschwerpunkt vorne bzw. hinten bezeichnen. Eingesetzt in die Gleichung (1) folgt daraus:

$$J_s \ddot{\vartheta} + c_s \dot{\vartheta} + \frac{\xi K_S c_v}{N^2} \left(1 - l_v c_\psi - c_\beta\right) \vartheta = N_A M_A + M_F \qquad (4)$$

Die Größe $K_S$ beschreibt dabei die Lenkunterstützung der Servolenkung und kann abhängig vom Unterstützungsgrad Werte zwischen 0 und 1 annehmen. $K_S=0$ steht dabei für eine maximale Servounterstützung und $K_S=1$ für Lenken ohne Servounterstützung.

Betrachtet man das Lenkmoment $M_F$ des Fahrers in Gleichung (4) als Störung, dann ergibt sich als Übertragungsfunktion des Lenksystems:

$$G_L(s) = \frac{\vartheta(s)}{M_A(s)} = \frac{N_A}{J_s s^2 + c_s s + c_L} \qquad (5)$$

mit

$$c_L = \frac{\xi K_S c_v}{N^2} \left(1 - l_v c_\psi - c_\beta\right) \qquad (6)$$

Diese Übertragungsfunktion weist $PT_2$-Verhalten auf.

Für den Momentenregelkreis 14 des Lenkstellers 3 kann z.B. eine Übertragungsfunktion $G_A(S)$ mit $PT_1$-Verhalten angesetzt werden:

$$G_A(s) = \frac{M_A(s)}{M_E(s)} = \frac{1}{T_1 s + 1} \tag{7}$$

Für den offenen Regelkreis ergibt sich somit insgesamt ein Streckenübertragungsverhalten:

$$G_0(s) = G_A(s) \cdot G_L(s) = \frac{N_A}{J_s T_1 s^3 + (T_1 c_S + J_s)s^2 + (T_1 c_L + c_s)s + c_L} \tag{8}$$

Diese Strecke kann nun z.B. mit einem P-Regelglied stabilisiert werden, wenn der Verstärkungsfaktor kp des Regelglieds im Bereich zwischen 0 und kp, $_{max}$ gewählt wird, wobei kp, $_{max}$ von den Parametern in den Gleichungen (5), (6) und (7) abhängt.

In dem dargestellten Ausführungsbeispiel ist das Übertragungsglied 13 mittels einer Kennlinie realisiert, die in Abhängigkeit von der Regelabweichung einen Momentenwert $M_E$ generiert. Die Kennlinie ist dabei so ausgelegt, dass die Regel- bzw. Lenkwinkelabweichung stabil kompensiert werden kann. Die Kennlinie kann z.B. eine Steigung m aufweisen, für die gilt $0 < m < k_{P, max}$.

Das Übertragungsglied 13 hat vorzugsweise nur P- und kein I-Verhalten. Eine durch einen Fahrereingriff am Lenkrad verursachte Störung wird dadurch nicht kompensiert, sondern führt zu einer bleibenden Regelabweichung. Ein Übersteuern des Führungsmoments $M_A$ durch den Fahrer bleibt dadurch jederzeit möglich.

Bezugszeichenliste

1 Lenkung
2 Lenkrad
3 Lenksteller
4 Riemen
5 Lenkstange
6 Lenkübersetzung
7 Vorderrad
8 Spurstange
10 Fahrer
11 Referenzmodell
12 Summierknoten
13 Übertragungsglied
14 Momentenregelkreis
15 Summierknoten
16 Übertragungsverhalten der Lenkung
17 Fahrspurerfassungs-System
18 Fahrzeug
19 Fahrspurmarkierung
20 Fahrspur
21 Regelkreis
22 Steuergerät
$\delta$ Lenkwinkel
$\delta_{ref}$ Referenz-Lenkwinkel
$M_E$ Moment des Übertragungsglieds
$M_A$ Führungsmoment
$M_F$ Fahrermoment
$\vartheta$ Lenkradwinkel

**Patentansprüche**

1. Vorrichtung zum Halten eines Fahrzeugs (18) in seiner Fahrspur (20), umfassend

   - einen Lenksteller (3), mit dem ein Lenkmoment ($M_A$) auf die Lenkung (1) des Fahrzeugs (18) ausgeübt werden kann,
   - ein Fahrspurerkennungssystem (17), mit dem die relative Position des Fahrzeugs (18) bezüglich seiner Fahrspur (20) sowie eine den Fahrbahnverlauf betreffende Information ermittelt werden kann, und
   - ein Referenzmodell (11), das in Abhängigkeit von den vom Fahrspurerkennungssystem (17) erhaltenen Daten eine Sollgröße ($\delta_{ref}$) berechnet,
   - einen geschlossenen Regelkreis (21) zur Lenkwinkelregelung, der ein Übertragungsglied (13) und den Lenksteller (3) als Stellglied der Regelung umfasst, wobei das Übertragungsglied (13) ein Regelverhalten aufweist, mit dem eine Regelabweichung der Regelgröße ($\delta$) stabil ausgeregelt werden kann,

   **dadurch gekennzeichnet,**

   - **dass** das Übertragungsglied (13) kein 1-Verhalten aufweist.

2. Vorrichtung nach Anspruch 1, **dadurch gekennzeichnet, dass** das Übertragungsglied (13) ein p-Glied ist.

3. Vorrichtung nach Anspruch 1 oder 2, **dadurch gekennzeichnet, dass** das Übertragungsglied (13) eine Kennlinie ist.

4. Vorrichtung nach Anspruch 3, **dadurch gekennzeichnet, dass** die Kennlinie einen linearen Abschnitt aufweist.

5. Vorrichtung nach einem der vorhergehenden Ansprüche, **dadurch gekennzeichnet, dass** das vom Lenksteller (3) aufgebrachte Moment ($M_A$) nur so stark ist, dass es vom Fahrer übersteuert werden kann.

6. Vorrichtung nach einem der vorhergehenden Ansprüche, **dadurch gekennzeichnet, dass** der Lenksteller einen Momentenregelkreis (14) umfasst.

7. Vorrichtung nach einem der vorhergehenden Ansprüche, **dadurch gekennzeichnet, dass** das Übertragungsglied (13) einen Momentenwert ($M_E$) erzeugt, der dem Lenksteller (3) bzw. dem Momentenregelkreis (14) als Eingangsgröße zugeführt wird.

8. Vorrichtung nach einem der vorhergehenden Ansprüche, **dadurch gekennzeichnet, dass** der Lenkwinkel die Regelgröße bildet und am Eingang des Regelkreises (21) eine Regelabweichung des Lenkwinkels berechnet wird.

9. Vorrichtung nach Anspruch 3, **dadurch gekennzeichnet, dass** die Kennlinie (13) in einem Steuergerät (22) hinterlegt ist.


**Claims**

1. Device for keeping a vehicle (18) in its traffic lane (20), comprising

   - a steering actuator (3) with which a steering torque ($M_A$) can be applied to the steering system (1) of the vehicle (18),
   - a traffic lane detection system (17) with which the relative position of the vehicle (18) with respect to its traffic lane (20) and information relating to the traffic lane profile can be determined, and
   - a reference model (11) which calculates a setpoint variable ($\delta_{ref}$) as a function of the data received from the traffic lane detection system (17),
   - a closed loop control system (21) for controlling the steering angle, which closed loop control system (21) comprises a transmission element (13) and the steering actuator (3) as actuator element of the control system, wherein the transmission element (13) has a control behaviour with which a control error of the controlled variable ($\delta$) can be compensated in a stable fashion,

   **characterized**

- **in that** the transmission element (13) does not have integral action.

2. Device according to Claim 1, **characterized in that** the transmission element (13) is a proportional-action element.

3. Device according to Claim 1 or 2, **characterized in that** the transmission element (13) is a characteristic curve.

4. Device according to Claim 3, **characterized in that** the characteristic curve has a linear section.

5. Device according to one of the preceding claims, **characterized in that** the torque ($M_A$) which is applied by the steering actuator (3) is only of such a magnitude that it can be overridden by the driver.

6. Device according to one of the preceding claims, **characterized in that** the steering actuator comprises a torque control circuit (14).

7. Device according to one of the preceding claims, **characterized in that** the transmission element (13) generates a torque value ($M_E$) which is fed to the steering actuator (3) and/or the torque control circuit (14) as an input variable.

8. Device according to one of the preceding claims, **characterized in that** the steering angle forms the controlled variable, and a control error of the steering angle is calculated at the input of the control circuit (21).

9. Device according to Claim 3, **characterized in that** the characteristic curve (13) is stored in a control unit (22).


**Revendications**

1. Dispositif pour maintenir un véhicule (18) sur sa voie de circulation (20) comprenant :

   - un actionneur de direction (3) permettant d'exercer un couple de direction ($M_A$) sur la direction (1) du véhicule (18),
   - un système de reconnaissance de voie de circulation (17) à l'aide duquel on détermine la position relative du véhicule (18) par rapport à sa voie de circulation (20) ainsi qu'une information concernant le tracé de la voie de circulation, et
   - un modèle de référence (11) qui, en fonction des données contenues dans le système de reconnaissance de voie de circulation (17), calcule une grandeur de consigne ($\delta_{ref}$),
   - une boucle de régulation (21) fermée, pour la régulation de l'angle de direction comprenant un organe de transmission (13) et l'actionneur de direction (3) comme organe d'actionnement de la régulation, l'organe de transmission (13) ayant un comportement de régulation qui permet de réguler de manière stable un écart de régulation de la grandeur de régulation ($\delta$),

   **caractérisé en ce que**

   - l'organe de transmission (13) n'a pas de comportement I.

2. Dispositif selon la revendication 1,
   **caractérisé en ce que**
   l'organe de transmission est un organe P.

3. Dispositif selon la revendication 1 ou 2,
   **caractérisé en ce que**
   l'organe de transmission (13) est une courbe caractéristique.

4. Dispositif selon la revendication 3,
   **caractérisé en ce que**
   la courbe caractéristique comporte un segment linéaire.

5. Dispositif selon l'une des revendications précédentes,
   **caractérisé en ce que**
   le couple ($M_A$) appliqué par l'actionneur de direction (3) correspond seulement à une force qui puisse être dominée par le conducteur.

6. Dispositif selon l'une des revendications précédentes,
**caractérisé en ce que**
l'actionneur de direction est un circuit de régulation de couple (14).

7. Dispositif selon l'une des revendications précédentes,
**caractérisé en ce que**
l'organe de transmission (13) génère une valeur de couple ($M_E$) appliquée comme grandeur d'entrée à l'actionneur de direction (3) ou au circuit de régulation de couple (14).

8. Dispositif selon l'une des revendications précédentes,
**caractérisé en ce que**
l'angle de direction forme la grandeur de régulation et à l'entrée du circuit de régulation (21), on calcule une déviation de régulation de l'angle de direction.

9. Dispositif selon la revendication 3,
**caractérisé en ce que**
la courbe caractéristique (13) est enregistrée dans un appareil de commande (22).

Fig. 1

Fig. 2

EP 1 833 715 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0980813 A1

**In der Beschreibung aufgeführte Nicht-Patentliteratur**

- **DRUCKSCHRIFTEN NAAB ; REICHHART.** Driver Assistance Systems for Lateral and Longitudinal Vehicle Guidance-Heading Control and Active Cruise Support. *AVEC 94*

- **SHIMAKAGE ; KAWAZOE ; SADANO ; MURAKAMI.** Design of Lane-Keeping Control with Steering Torque input for a Lane-Keeping Support System. *SAE Technical Papers 2001-01-0480*